# EUROPEAN PATENT APPLICATION

(11) **EP 1 246 466 A1**
(43) Date of publication of application: **02.10.2002**
(21) Application number: 01303083.8
(22) Date of filing: 30.03.2001
(51) Int. Cl.: H04N 7/173

(54) **Content management**

(71) Applicant: BRITISH TELECOMMUNICATIONS public limited company, London EC1A 7AJ (GB)
(72) Inventor: The designation of the inventor has not yet been filed
(74) Representative: Maggs, Michael Norman

(57) **Abstract**

A method and system for content management, for example for managing content-rich services such as video on demand or news-feeds, includes a content-definition schema (10) comprising a plurality of content definitions (12). The stored definitions automatically configure a user interface (26,28) for the receipt of content, as well as automatically controlling content validation which may be carried out both locally and remotely of a content provider (22). The definitions (12) may also automatically configure a content database (20) which stores the content. The content definitions (12) may be modified by means of an administrative tool (40) which allows a relatively unskilled operator (42) to select options from a list.

## Description

The present invention relates to content management, and in particular although not exclusively to the managing of content within the context of content-rich services such as video on demand, news services and so on.

Experience has shown that operating costs for the provision of content services can be high. One reason for this is the complexity involved in receiving, validating, managing, storing and distributing a large variety of different types of content, each of which typically has its own characteristics and peculiarities. For video on demand, for example, the content that needs to be managed may include not only the video itself, but the video characteristics, delivery arrangements, content addresses, version control, session expiry details, archiving arrangements, synopsis text, video length, lists of actors, reviews and so on.

A variety of content management tools and tool sets are available, but all require the content system operators to have expert skills, for example in configuring databases and writing input and validation scripts. This is of course not only expensive, but is also undesirable in principle. The configuration of a current system to accept a content feed of a new type, for example, is a skilled and relatively lengthy operation, which inevitably brings with it the possibility of introducing coding or other configuration errors.

A further difficulty is that current content management toolsets produce systems that are not particularly scalable: they produce specific applications for receipt of each type of content, and the number of different content items that can be managed is limited by the amount of code that the systems can handle. Global changes across multiple content types are difficult to deal with, as they require separate changes to the code for each of the individual applications.

According to a first aspect of the present invention there is provided a method of content management comprising:
(a) generating and storing a content-definition schema (10) comprising a plurality of content definitions (12);
(b) automatically configuring a user interface (24) for the receipt of content in dependence upon a content definition (12) within the content-definition schema (10); and
(c) automatically validating received content in dependence upon the content definition (12).

According to a second aspect of the invention there is provided a content management system comprising:
(a) a content-definition schema (10) including a plurality of content definitions (12);
(b) means for automatically configuring a user interface (24) for the receipt of content in dependence upon a content definition (12) within the content-definition schema (10); and
(c) means for automatically validating received content in dependence upon the content definition (12).

The invention further extends to a computer program for carrying out any such method, and to a computer-readable carrier which carries such a computer program.

In one preferred embodiment of the invention, a definition of a type of content is stored, and this definition is used automatically/dynamically to configure three separate parts of the system, namely database tables that will hold the content, validation mechanisms for checking the content as it is loaded into the system, and form and batch loading mechanisms that receive the content from a content provider and import it into the system.

Preferably, the definition may be input, modified and deleted using a simple Web form which does not require expert and/or coding skills. Preferably, the definition may be edited simply by selecting one or more of a predefined plurality of options provided by an administrative tool.

In its various forms, the invention offers distinct advantages in terms of scalability and application management, as the tools are driven by a single generic application which takes a content definition as input parameter. There is no longer any need to use individual applications to input, manage and/or make use of content of different types: a single automatically configurable system, entirely or almost entirely driven by the stored definitions, is all that is required.

The stored definitions are preferably hierarchical so that global changes may easily be made which will automatically affect a variety of different content types.

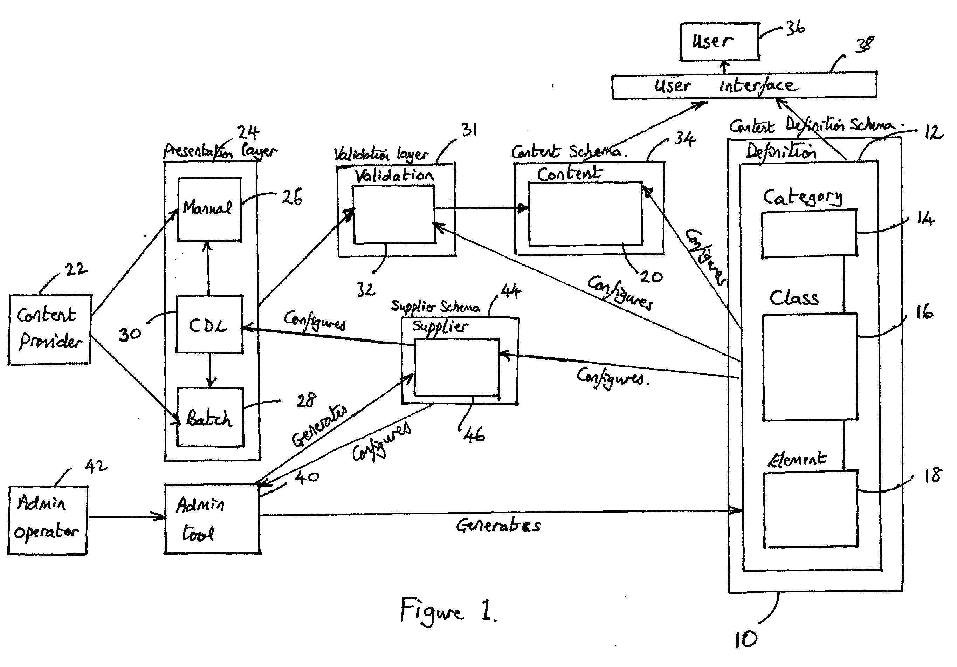

The invention may be carried into practice in a number of ways, and one specific example will now be described, with reference to Figure 1. Figure 1 is a schematic block diagram of a content management system according to a preferred embodiment of the present invention.

In the present invention, content management is handled by means of a stored content-definition schema 10 which comprises a plurality of content definitions 12 (only one of which is shown for clarity). Each content definition comprises a hierarchical collection of definition objects namely categories 14, classes 16 and elements 18. For each category there will typically be more than one class, and for each class there will be typically be more than one element.

The category object 14 defines, at the highest level, a content type, such as for example news, video on demand, film reviews, sports reports and so on.

It would also be possible, if desired, for the individual content categories 14 to be associated with specific content providers. More normally, however, the content category simply provides a logical overall grouping of individual content provider-owned classes.

Each category has associated with it one or more class objects 16 which are representative of individual classes of content within the overall category. Each class defines a particular type of content, typically from a specific content provider. So, for example, if the category were to be news, there may be individual classes for news-feeds from the BBC, Reuters and CNN. Where a particular content provider wishes to supply news in a variety of different formats, that content provider may have a variety of different individual classes, for example BBC World News, BBC Local News, BBC Sports News and so on.

Along with the content definitions, each class object includes the following:
- **TTL (Time to live) information.** This defines how long the object is valid for.
- **Workflow information.** This specifies the steps that the object has to go through before the system will accept it as valid. So, for example, the workflow information may specify that the object has to be approved by an editor and by the legal department before it can be accepted as valid. The workflow information may be stored as part of the class itself or, more preferably, the class may simply store a link to a separate external workflow system (not shown).
- **Storage information.** The class includes a link to or an address of an area within a content database 20 which is used to store content relating to that particular class.

Each class 16 is typically associated with a plurality of individual elements 18, each of which defines a particular object within the class. So, for example, where the class is a BBC news-feed, the individual elements might include definitions of images and text elements within that news-feed. Each element 18 includes:
- **Constraints.** These define the constraints applicable to the individual element, such as the valid input ranges. An image element might for example be associated with a size constraint, and a text element with a constraint on the allowable number of characters. These constraints are required to ensure that, when retrieved by a user, the content displays properly on the user's web page or other application.
- **Storage information.** This defines where the content data corresponding to the individual element will be stored within the content database 20.

A content provider 22 wishing to supply content to the system makes use of a presentation layer 24 to select either manual or batch input. If manual input is selected, a Content Definition Library (CDL) 30 dynamically configures a client-side manual entry application 26 so that it becomes ready to receive the particular content that the provider 22 wishes to supply. The manual input application 26 may be embodied in a variety of different ways, but in the preferred arrangement it comprises an application which dynamically configures forms on a web page using HTML (Hypertext Mark-up Language). The CDL physically runs on a system server (not shown)

Alternatively, the content provider 22 may wish to supply content via a batch input application 28 which, likewise, is dynamically configured by the CDL 30. The batch application preferably accepts input via XML (Extensible Mark-up Language), the XML being reconfigured automatically in dependence upon the type of input required by the provider 22. The batch application physically runs on the system server (not shown).

The CDL is itself configured by a supplier database 46 which makes up a supplier schema 44 running at a supplier layer on the server (not shown). The supplier schema provides persistent storage of the mappings between particular content providers 22 and their respective content definitions 12. The mappings are themselves configured in dependence upon the specific stored definitions within the content-definition schema 10

The constraints stored within the definitions 12 dynamically configure the manual application 26, via the supplier layer and the CDL 30, to carry out validation of manually-entered content. This is carried out by the server supplying code to the client, to be run locally. So, for example, the system may check locally whether a word count limitation has been exceeded. If so, the system rejects the content that has been supplied and/or warns the content provider that the definition constraints have been breached.

For the batch application 28, running on the server, the system runs pre-defined validation routines generated or selected according to the content-definition schema 10, again via the supplier layer and the CDL 30.

If these validation checks are passed, the content is then submitted to a remote validation layer 31 which includes a content validation module 32. Typically, the content will be supplied across the Internet, for example across a broadband link, to the server (not shown) under the control of the system owner, on which the validation layer 31 is held.

The validation layer 31 and the validation module 32 are automatically configured on the basis of the appropriate definitions contained within the content-definition schema 10, allowing more complex data validation to be carried out. For example, the validation module may check for image sizing, allowable image size ratios, and other complex checks which may be difficult or inconvenient to run within the presentation layer 24. The validation rules running within the validation module 32 may be encoded in any convenient language, for example C++ or Java.

If these validation tests are failed, the content is rejected and/or a message is sent back to the content provider 22 advising that the definition constraints have been breached.

If the content passes this second level of validation, it is then stored within the content database 20. The location of each individual data element within the databases is determined from the storage information defined by the appropriate classes 16 and the elements 18. In a simple embodiment, the content database 20 may comprise a flat file database with data representative of individual classes being stored in respective tables. In such an arrangement, each element within a class may be represented by a column within the table. Of course, more complex database systems are equally possible.

The database 20 runs on a Relational Database Management System (RDBMS) defining a content schema 34 which will typically be held on the server (not shown) controlled by the system owner.

It should be appreciated that in figure 1, the schemas 10, 34 and 44 will normally (but need not) be embodied by means of a database. However, other embodiments, such as simple stored lists, would also be possible. The manual and batch applications 26, 28, the CDL 30, and the validation module 32, are embodied in code.

The schemas 10, 34 and/or 44 may all be held on the same server. This may, but need not, be the same server which runs the code corresponding to the modules 30, 32 and/or 28.

A user 36 wishing to access content does so through a user interface 38 running locally. The user interface may take the form of, for example, a web browser or a Wireless Application Protocol (WAP)-enabled application.

As shown in the figure, the user interface 38 may access the appropriate content definition 12 to locate the content required within the content database 20, following which it may be downloaded across a broadband or a narrowband link with the user. Alternatively, the user interface 38 may already have knowledge of the content addresses (supplied directly by the content provider 22), thereby enabling the user to access the required content directly without needing to access the definition.

It will be understood that the user 36 may be able to access the content in a variety of ways. Wired or wireless access, preferably via the Internet, is preferred but it is equally possible for content to be extracted from the database 20 and supplied on physical media (e.g. a CD or a DVD) to the user.

The system includes an administrative tool 40, operated by an administrative operator 42, to enable modifications to be made to the definitions within the content-definition schema 10. The administrative operator may be the system owner, or somebody authorised by him. The system owner may if desired authorise certain content providers 22 to act as administrative operators (with appropriate security in place), thereby allowing a content provider to modify his own classes and/or elements, and also to add new ones.

The administrative tool 40 provides access to the classes and elements (and possibly to the categories as well), allowing each to be configured by a non-expert user. The supplier schema 44 controls access to the tool functionality, ensuring that only appropriately-authorised operators 42 can modify the content definitions. Suitably authorised operators may be permitted to modify the supplier schema 44.

For a typical admin operator 42, the tool provides a list of all possible constraints, which may be selected and applied as desired to modify an existing content definition, or to set up a new one.

Some constraints may instruct the system to configure the presentation layer 24 to carry out validation there; while some may instruct the system to run a predefined block of code within the validation layer 30. Some options could effect both possibilities. In each case, however, what the system will be doing is entirely transparent to the administrative operator 42 who simply needs to select the required constraints from a list that the administrative tool provides and, if appropriate, fill in one or more constraint values. Such an approach enables constraint checking and validation to be very easily managed by non-expert operators.

The entirety of the information required to drive the input and validation process for a given content provider 22 is contained within the content definition 12: the content definition drives the entire process. For multiple content providers, information stored within the supplier schema 44 is also used: specifically, to define the mappings applicable to a particular content provider who wishes to submit content.

In one version of the invention, the content database 20 may be static, for example taking the form of a flat file database with tables representing class data and columns within those tables representing element data. Alternatively, in a more sophisticated approach, the structure of the content database 20 may be dynamically configured, as required, from the changing content definitions as specified by the administrative operator 42. So, in the flat database example just mentioned, the creation of a new class by the administrative operator will automatically result in the creation of a new table within the content database. Likewise, the creation of a new element will result in the creation of a new column within the appropriate table. Other forms of dynamic configuration of the content database, based upon the definitions, could of course equally well be used.

With such an arrangement, the definitions contained within the overall content-definition schema 10 act as the sole drivers for receiving, validating, managing and delivering content, thereby removing the need for the expensive operational skills traditionally required for running content services.

## Claims

1. A method of content management comprising:
(a) generating and storing a content-definition schema (10) comprising a plurality of content definitions (12);
(b) automatically configuring a user interface (24) for the receipt of content in dependence upon a content definition (12) within the content-definition schema (10); and
(c) automatically validating received content in dependence upon the content definition (12).

2. , A method of content management as claimed in claim 1 in which the content is validated remotely from a content provider by a validation module (32) which is automatically configured in dependence upon the content definition (12).

3. A method of content management as claimed in claim 2 in which the content definition (12) determines validation code which is executed by the validation module (32).

4. A method of content management as claimed in any one of the preceding claims in which the user interface (24) validates the content on receipt of the content from a content provider (22).

5. A method of content management as claimed in claim 4 in which the content provider (22) supplies content for a form, the form being dynamically reconfigured in dependence upon the content definition (12).

6. A method of content management as claimed in claim 5 in which the form includes embedded validation instructions which are executed when the form is used, the validation instructions being automatically configured in dependence upon the content definition (12).

7. A method of content management as claimed in claim 4 in which the content provider (22) supplies batched content to a batch input application (28) running validation instructions which are automatically configured in dependence upon the content definition (12).

8. A method of content management as claimed in any one of the preceding claims including automatically configuring a content database (20), for storing content data, in dependence upon the content definition (12).

9. A method of content management as claimed in claim 8 in which the content database configuration includes adding new tables to the database (20) and new columns to the tables.

10. A method of content management as claimed in any one of the preceding claims in which the content definition (12) is encapsulated within an object-based hierarchy including a class object (16) and an element object (18).

11. A method of content management as claimed in claim 10 in which the content validation is effected in accordance with constraints stored within the class objects (16), the element objects (18), or both.

12. A method of content management as claimed in any one of the preceding claims including supplying content to a user (36) in dependence upon the content definition (12).

13. A method of content management as claimed in claim 12 including referring to the content definition (12) to ascertain a storage location for the content.

14. A method of content management as claimed in any one of the preceding claims including editing the content definition (12) to alter the content validation which is to be applied to received content.

15. A method of content management as claimed in claim 14 in which the editing is carried out by selecting from a plurality of predefined validation options.

16. A method of content management as claimed in any one of the preceding claims in which the content definition (12) includes all the required configuration instructions to effect the receipt and validation of content.

17. A method of content management as claimed in claim 16 in which the content definition (12) further includes all the required configuration instructions to effect storage of content.

18. A method of content management as claimed in claim 16 in which the content definition (12) further includes all the required configuration instructions to configure a database for storage of content.

19. A computer program for carrying out a method as claimed in any one of the preceding claims.

20. A computer-readable carrier carrying a computer program as claimed in claim 18.

21. A content management system comprising:
(a) a content-definition schema (10) including a plurality of content definitions (12);
(b) means for automatically configuring a user interface (24) for the receipt of content in dependence upon a content definition (12) within the content-definition schema (10); and
(c) means for automatically validating received content in dependence upon the content definition (12).

22. A content management system as claimed in claim 21 including a validation module (32), remote from a content provider, the validation module being automatically configured in dependence upon the content definition (12).

23. A content management system as claimed in claim 22 in which the content definition (12) determines validation code which is executed by the validation module (32).

24. A content management system as claimed in any one of claims 21 to 23 including a user interface (24), the user interface validating the content on receipt of the content from a content provider (22).

25. A content management system as claimed in claim 24 in which the user interface (24) includes a content-entry form, the form being dynamically reconfigured in dependence upon the content definition (12).

26. A content management system as claimed in claim 25 in which the form includes embedded validation instructions which are executed when the form is used, the validation instructions being automatically configured in dependence upon the content definition (12).

27. A content management system as claimed in claim 24 including a batch input application (28) for receipt of batched content, the batch input application running validation instructions which are automatically configured in dependence upon the content definition (12).

28. A content management system as claimed in any one of claims 21 to 27 including a content database (20) for storing content data, and means for automatically configuring the content database in dependence upon the content definition.

29. A content management system as claimed in claim 28 including means for adding new tables to the database (20) and adding new columns to the database tables.

30. A content management system as claimed in any one of claims 21 to 29 in which the content definition (12) is encapsulated within an object-based hierarchy including a class object (16), and an element object (18).

31. A content management system as claimed in claim 30 including means for effecting content validation in accordance with constraints stored within the class objects (16), the element objects (18), or both.

32. A content management system as claimed in any one of claims 21 to 31 including means for supplying content to a user (36) in dependence upon the content definition (12).

33. A content management system as claimed in claim 32 including means for referring to the content definition (12) to ascertain a storage location for the content.

34. A content management system as claimed in any one of claims 21 to 33 including an administrative tool for editing the content definition (12) thereby altering the content validation which is applied to received content.

35. A content management system as claimed in claim 34 in which the administrative tool provides a plurality of predefined validation options for selection by a user.

36. A content management system as claimed in any one of claims 21 to 35 in which the content definition (12) includes all of the required configuration instructions to effect the receipt and validation of content.

37. A content management system as claimed in claim 36 in which the content definition (12) further includes all the required configuration instructions to effect storage of content.

38. A content management system as claimed in claim 36 in which the definition (12) further includes all the required configuration instructions to configure a database for storage of content.

39. A method of content management as claimed in any one of claims 1 to 18 including a supplier schema (44) including a plurality of content-supplier-dependent interface configuration definitions, the user interface (24) being configured in dependence upon the interface configuration definitions.

40. A content management system as claimed in any one of claims 21 to 38 including a supplier schema (44) including a plurality of content-supplier-dependent interface configuration definitions, and means for configuring the user interface (24) in dependence upon the interface configuration definitions.
